# EUROPÄISCHE PATENTSCHRIFT

(11) **EP 1 857 317 B1**
(45) Veröffentlichungstag und Bekanntmachung des Hinweises auf die Patenterteilung: **01.04.2009**
(21) Anmeldenummer: 07008057.7
(22) Anmeldetag: 20.04.2007
(51) Int. Cl.: B60K 17/04

(54) **Radnabenantrieb für Flurförderzeuge**
Wheel hub drive for industrial trucks
Moyeu de roue pour chariots de manutention

(30) Priorität: 19.05.2006 DE 102006023577
(43) Veröffentlichungstag der Anmeldung: 21.11.2007
(73) Patentinhaber: Jungheinrich Aktiengesellschaft, 22047 Hamburg (DE)
(72) Erfinder: Rogg, Andreas, Dipl.-Ing., 23554 Lübeck (DE)
(74) Vertreter: Hauck Patent- und Rechtsanwälte

(56) Entgegenhaltungen:
- EP-A- 1 403 118
- DE-A1- 2 316 932
- DE-A1- 19 904 552
- US-A- 3 812 928
- US-A1- 2004 065 169

## Beschreibung

Die Erfindung bezieht sich auf einen Radnabenantrieb mit Antriebsmotor und Antriebsgetriebe für Flurförderzeuge nach den Patentansprüchen 1 und 2.

Für den Fahrantrieb von Flurförderzeugen werden häufig Radnabenantriebe eingesetzt. Diese stellen eine Kombination aus einer Radlagerung und eines Getriebes zur Wandlung der Antriebsdrehmomente und -drehzahlen dar. Radnabenantriebe werden sowohl für ungelenkte als auch gelenkte Räder bei Flurförderzeugen eingesetzt. Das Getriebe überträgt das Antriebsdrehmoment von dem Fahrmotor auf das Antriebsrad. Die Radlagerung dient zur Abstützung der Radaufstandskräfte. Der Bauraum ist in der Regel äußerst begrenzt, so daß eine kompakte Bauweise gefordert ist.

Im Stand der Technik ist eine Reihe von Radnabenantrieben bekannt geworden. Aus EP 1 167 140 B1 oder DE 102 58 913 A1 sind Radnabenantriebe bekannt geworden, bei denen zwei Kegelrollenlager in O-Anordnung die Radlagerung bilden und das als Planetengetriebe ausgeführte Antriebsgetriebe koaxial zur Radmittelachse angeordnet ist. Der äußere Durchmesser der Kegelrollenlager ist weitgehend identisch mit dem Teilkreisdurchmesser eines Hohlrades des Planetengetriebes. Ein Radnabenantrieb ähnlicher Bauart, bei dem das Antriebsgetriebe radial innerhalb der Radlagerung untergebracht ist und in den sowohl eine Bremse als auch ein Antriebsmotor eingebaut ist, ist in DE 100 61 221 A1 beschrieben.

Aus US 2004/065 169 ist ein Radnabenantrieb mit den Merkmalen des Oberbegriffs der Ansprüche 1 und 2 bekannt.

DE 196 33 071 C2 offenbart ein einstufiges Planetengetriebe für ein Radnabenantrieb, bei dem der Planetenträger zur Aufnahme der Radlagerung dient, die aus einem Wälzlager auf der drehmomentleitenden und einem Wälzlager auf der nichtdrehmomentleitenden Seite des Planetenträgers seitlich neben der Planetenstufe besteht. Um die geforderte Übersetzung des Antriebsgetriebes zu erreichen, ist das Planetengetriebe durch ein Stirnradgetriebe ergänzt, so daß der Antriebsmotor achsversetzt zur Radmittelachse positioniert ist.

In DE 199 11 458 A1 ist ein Radnabenantrieb eines elektromotorisch gelenkten Rades offenbart, bei dem Radlagerung und Antriebsgetriebe nebeneinander angeordnet sind. Ein Drehschemel für die Rad-Antriebseinheit ist über ein Vierpunktlager im Fahrzeugrahmen drehbar gelagert, wobei das als Wolfromgetriebe ausgeführte Lenkgetriebe radial innerhalb des Vierpunktlagers untergebracht ist. In der genannten Druckschrift ist auch eine Anordnung offenbart, mit der eine aus zwei Wälzlagern gebildete Drehschemellagerung und das als Planetengetriebe ausgeführte Lenkgetriebe koaxial zur Längsachse übereinander angeordnet sind.

In DE 101 32 319 A1, DE 100 62 315 A1 und DE 103 34 939 A1 sind Radnabenantriebe für gelenkte Räder beschrieben, wobei Antriebsmotor oder Antriebsgetriebe radial innerhalb zumindest eines Wälzlagers der Radlagerung angeordnet sind und der Drehschemel mit Hilfe eines Vierpunktlagers im Fahrzeugrahmen drehbar gelagert ist.

Der Erfindung liegt die Aufgabe zugrunde, einen Radnabenantrieb für Flurförderzeuge zu schaffen, bei dem die aus Antriebsgetriebe und Radlagerung bestehende Einheit besonders kompakt ausgeführt ist. Insbesondere soll eine Anordnung mit möglichst kleinem Außendurchmesser und begrenzter Breite geschaffen werden, die ein maximales Drehmoment auf das Antriebsrad überträgt.

Diese Aufgabe wird durch die Merkmale der Patentansprüche 1 und 2 gelöst.

Beim erfindungsgemäßen Radnabenantrieb sind Antriebs- und Abtriebsachse des Antriebsgetriebes, Drehachse des Rades und Antriebsachse des Antriebsmotors koaxial angeordnet. Das Antriebsgetriebe ist ein zweistufiges Planeten-Koppelgetriebe. Zwei horizontal beabstandete Radlager befinden sich innerhalb des Antriebsgetriebes, wobei ein erstes Radlager sich zwischen einem mit der Radnabe verbundenen ersten Lagerabschnitt und einem rahmenfesten Planetenträger angeordnet ist, wobei der erste Lagerabschnitt von einem zweiten Planetenträger einer ersten Stufe des Planeten Koppelgetriebes gebildet ist

Bei der Lösung nach Patentanspruch 2 ist das Antriebsgetriebe ein einstufiges Stufenplanetengetriebe. Zwei horizontal beabstandete Radlager befinden sich innerhalb des Antriebsgetriebes, wobei ein erstes Radlaler zwischen einem mit der Radnabe verbundenen ersten Lagerabschnitt oder einem rahmenfesten Planetenträger und ein zweites Radlager zwischen dem ersten Lagerabschnitt und einem rahmenfesten zweiten Lagerabschnitt oder dem rahmenfesten Planetenträger angeordnet ist. Ein mit der Radnabe verbundener Lagerzapfen bildet beide Lagerabschnitte für die Radlager, die sich auf einer Seite eines rahmenfesten Planetenträgers abstützen.

Bei der Erfindung wird eine kompakte Antriebseinheit in koaxialer Bauweise erzielt, die sowohl für den Antrieb ungelenkter Räder (als Einzelantrieb oder als Teil einer Achse) als auch für den Antrieb gelenkter Räder (manuell- oder kraftgelenkter Räder) dienen kann. Bei dem Planeten-Koppelgetriebe erfolgt eine Leistungsaufteilung auf beide Getriebestufen, so daß eine höhere Drehmomentkapazität bei identischem Bauraum realisiert werden kann. Die innen liegende Radlagerung erlaubt einen größtmöglichen Getriebedurchmesser in bezug auf die Radgröße, ohne daß die axiale Baulänge nennenswert vergrößert wird. Durch den Einsatz kleiner Radlager wird der Aufwand für diese verringert.

Der Fahrmotor ist ein Elektro- oder Hydromotor. Die Radlager sind vorzugsweise Kegelrollenlager.

Nach einer Ausgestaltung der Erfindung ist es vorteilhaft, wenn die Radnabe als Hohlrad ein Abtriebsteil für die zweite Stufe des Planeten-Koppelgetriebes bzw. die letzte Stufe des Stufenplanetengetriebes bildet.

Wie schon erwähnt, kann der erfindungsgemäße Radnabenantrieb auch für gelenkte Räder in Verbindung mit einem Drehschemel verwendet werden, der um eine vertikale Achse verdrehbar ist. Hierzu sieht eine Ausgestaltung der Erfindung vor, daß der Rahmen von einem Lenkdrehschemel für das gelenkte Rad des Radnabenantriebs gebildet ist, der in einem Gehäuse den Antriebsmotor und gegebenenfalls eine Bremse lagert. Der Drehschemel kann nach einer weiteren Ausgestaltung der Erfindung über ein Vierpunktlager gegenüber einem Rahmen des Flurförderzeugs um eine vertikale Achse drehbar gelagert sein. Alternativ ist vorgesehen, daß der Drehschemel über einen vertikalen Lagerzapfen und vertikal beabstandeten Lagern am Fahrzeugrahmen gelagert ist.

Bei der Verwendung für ein gelenktes Rad ist es nach einer weiteren Ausgestaltung der Erfindung vorteilhaft, wenn Antriebsgetriebe, Antriebsmotor und Bremse als Einheit in einem Gehäuse angeordnet sind, das von der Radnabe, den Drehschemel und einem Deckel begrenzt ist, wobei der Deckel auf der der Radnabe entgegengesetzten Seite angeordnet ist.

Der Drehschemel kann von einem Lenkmotor betätigt werden. In diesem Zusammenhang sieht eine Ausgestaltung der Erfindung vor, daß der Lenkmotor über ein Lenkgetriebe, insbesondere ein Planeten-Koppelgetriebe oder ein- oder mehrstufiges Stufenplanetengetriebe mit dem Drehschemel gekoppelt ist und die Lagerung des Drehschemels innerhalb des Lenkgetriebes angeordnet ist. Auch hierbei wird eine kompakte Antriebsanordnung für den Drehschemel bei maximaler Drehmomentübertragung erhalten.

Mit dem Gehäuse des Lenkantriebs kann ein Winkelsensor verbunden sein, der auf der Achse des Lenkmotors liegt. Mit dem Drehschemel bzw. einem mit dem Drehschemel verbundenen Lagerzapfen oder Planetenträger ist eine Welle verbunden, die sich koaxial durch den Rotor des Lenkmotors zum Winkelsensor hin erstreckt. Mit Hilfe eines derartigen Winkelsensors kann eine Winkelmessung vorgenommen werden, bei der eine weitere oder alternative Winkelmessung mit einem Inkrementalsensor vorgenommen wird, der eine Kontur an einem mit dem Drehschemel verbundenen Bauteil abtastet.

Die Erfindung wird nachfolgend anhand von mehreren Ausführungsbeispielen näher erläutert.
- Fig. 1: zeigt einen Schnitt durch einen Radnabenantrieb nach der Erfindung mit Planeten-Koppelgetriebe.
- Fig. 2: zeigt einen Schnitt durch einen Radnabenantrieb nach der Erfindung mit einem Stufenplanetengetriebe.
- Fig. 3: zeigt ein Radnabenantrieb für ein gelenktes Rad mit PlanetenKoppelgetriebe als Fahrantriebsgetriebe.
- Fig. 4: zeigt einen Schnitt durch einen Radnabenantrieb für ein gelenktes Rad mit Stufenplanetengetriebe als Fahrantriebsgetriebe.
- Fig. 5: zeigt einen Schnitt durch einen Radnabenantrieb nach der Erfindung für ein gelenktes Rad mit Planeten-Koppelgetriebe als Fahrantriebsgetriebe und einem Planeten-Koppelgetriebe als Lenkgetriebe.
- Fig. 6: zeigt einen Schnitt durch einen Radnabenantrieb nach der Erfindung für ein gelenktes Rad mit Planeten-Koppelgetriebe als Fahrantriebsgetriebe und einem Planeten-Koppelgetriebe als Lenkgetriebe.
- Fig. 7: zeigt einen Schnitt durch einen Radnabenantrieb nach der Erfindung für ein gelenktes Rad mit Stufenplanetengetriebe als Fahrantriebsgetriebe und einem Stufenplanetengetriebe als Lenkgetriebe.
- Fig. 8: zeigt einen Schnitt durch einen Radnabenantrieb nach der Erfindung für ein gelenktes Rad mit einem Stufenplanetengetriebe als Fahrantriebsgetriebe und einem Stufenplanetengetriebe als Lenkgetriebe.
- Fig. 9: zeigt einen Schnitt durch einen Radnabenantrieb nach der Erfindung für ein gelenktes Rad mit Lenkgetriebe für den Fahrantrieb und den Lenkantrieb.

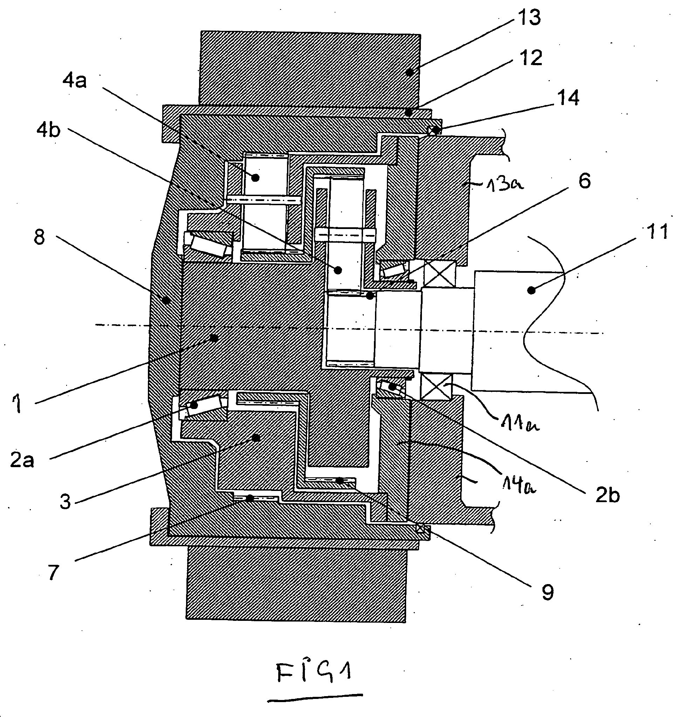

In Fig. 1 sitzt auf einer Radfelge 12 ein Reifen 13. Das dargestellte Rad ist z.B. ein angetriebenes Rad eines Flurförderzeuges, z.B. eines Vierrad-Gabelstaplers. Es wird von einem nicht gezeigten Antriebsmotor, der ein Elektro- oder ein Hydromotor sein kann, angetrieben über eine Antriebswelle 11. Die Antriebswelle 11 ist über ein Lager 11a in einem Rahmenabschnitt 13a des Flurförderzeugs drehbar gelagert. Mit dem Rahmenabschnitt 13a ist ein Schild 14a fest verbunden.

Am Ende der Antriebswelle 11 ist ein Ritzel 6 angeformt, das jedoch auch separat drehfest auf der Welle 11 angeordnet sein kann. Es kämmt mit Planetenrädern 4b, die in einem Planetenträger 1 gehalten und gelagert sind. Der Planetenträger 1 ist mit einer Nabe 8 des Rades fest verbunden, welche annähernd topfförmig ausgebildet ist, wobei der Randabschnitt ein Hohlrad mit einer inneren Verzahnung 7 bildet. Die Planetenräder 4b kämmen mit einem Abschnitt einer Koppelwelle 9, deren anderer Abschnitt mit Planetenrädern 4a zusammenwirkt, die in einem Planetenträger 3 gelagert sind, der seinerseits fest mit dem Schild 14a verbunden ist. Die Planetenräder 4a wirken mit der Zahnung 7 des Hohlrades zusammen und letzteres bildet das Abtriebsteil zur Drehung des gezeigten Rades.

Ein erstes Kegelrollenlager 2a ist zwischen den Planetenträgern 1, 3 nahe der Nabe 8 angeordnet, und ein zweites Kegelrollenlager 2b ist zwischen einem im Durchmesser relativ kleinen Abschnitt des Planetenträgers 1 und dem Schild 14a angeordnet. Die Rollenlager 2a, 2b dienen zur Übertragung der Radaufstandskräfte auf den Rahmen 13a.

Wie erkennbar, liegt als Antriebsgetriebe ein Planeten-Koppelgetriebe vor, wobei sich die Lager 2a, 2b innerhalb des Antriebsgetriebes befindet. Um ein hohes Übersetzungsverhältnis zu erzielen, können die Planetenräder 4a, 4b auch als Stufenplanetenräder ausgeführt werden. Dem Getriebe kann auch ein weiteres Planetengetriebe vorgeschaltet werden, und auf der Antriebswelle 11 kann eine Bremse, z.B. eine naßlaufende Lamellenbremse oder eine Elektromagnetbremse angebracht sein.

Wie erkennbar, sind die Achsen des Antriebsmotors bzw. der Antriebswelle, die Radachse und die Achse des Antriebsgetriebes koaxial. Zur Aufnahme des Lagers 2a ist der Planetenträger 1 im Bereich des Lagers als zylindrischer Abschnitt geformt, der hohe Kräfte aufzunehmen in der Lage ist. Die Lager 2a, 2b liegen in jedem Fall deutlich radial innerhalb der Achsen der Planetenräder 4a, 4b. Insgesamt ist ein sehr kompaktes Antriebsgetriebe gebildet mit größtmöglichem Getriebedurchmesser bezogen auf die Abmessungen des Rades. Der Durchmesser der Lager ist relativ klein, so daß der Aufwand hierfür relativ gering ist.

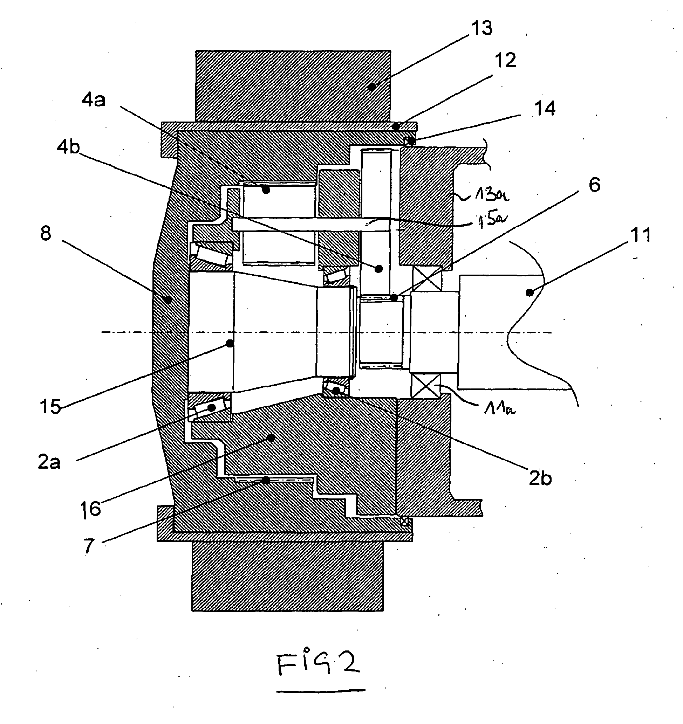

Soweit bei der Ausführungsform nach Fig. 2 gleiche Teile wie in Fig. 1 gezeigt sind, sind sie mit gleichen Bezugszeichen versehen. Im Unterschied zur Ausführungsform nach Fig. 1 ist bei der nach Fig. 2 ein Stufenplanetengetriebe vorgesehen, mit Planetenrädern 4a und Planetenräder 4b, wobei letztere mit dem Ritzel 6 in Eingriff sind. Die Planetenräder 4a, 4b sind über eine Welle 15 gekoppelt. Ein Planetenträger 16 ist fest mit dem Rahmenabschnitt 13a verbunden. Mit der Nabe 8 ist ein Lagerzapfen 15 fest verbunden, der aus einem ersten zylindrischen Abschnitt, einem konischen und einem zweiten im Durchmesser kleineren zylindrischen Abschnitt zusammengesetzt ist. Auf dem ersten zylindrischen Abschnitt sitzt das Kegelrollenlager 2a, das sich außen am Planetenträger 16 abstützt. Auf dem zweiten zylindrischen Abschnitt des Lagerzapfens 15 sitzt das zweite Kegelrollenlager nahe dem Ritzel 6. Es stützt sich außen ebenfalls auf einem Abschnitt des Planetenträgers 16 ab. Das Abzugsteil wird wiederum von dem Hohlrad der Nabe 8 gebildet mit der Zahnung 7, mit der die Planetenräder 4a in Eingriff sind.

Eine berührende Dichtung 14 ist zwischen dem Rand der Nabe 8 und dem Rahmenabschnitt 13a angeordnet. Dies ist im übrigen auch bei der Ausführungsform nach Fig. 1 der Fall.

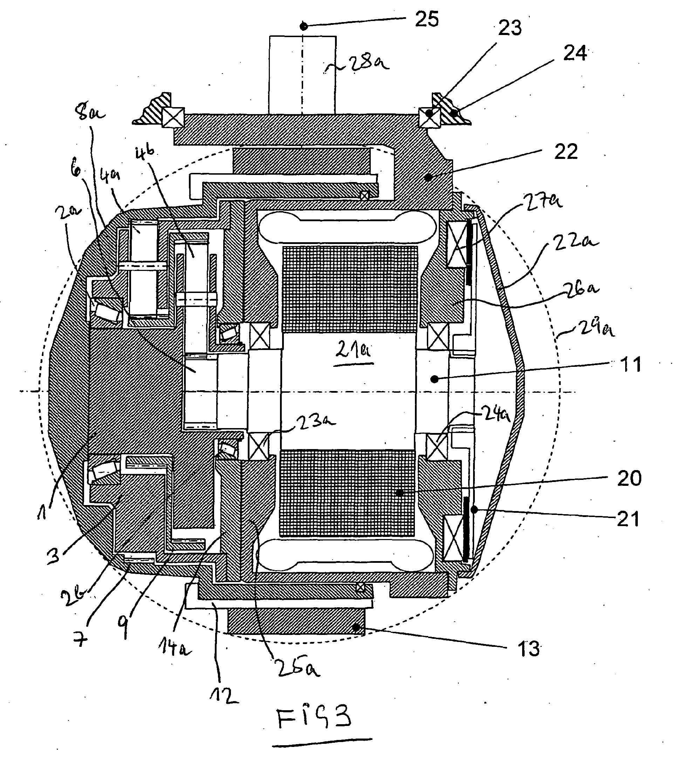

Bei der Ausführungsform nach Fig. 3 ist ein Antriebsgetriebe, wie es in Fig. 1 dargestellt ist, für ein lenkbares Rad vorgesehen und innerhalb eines Gehäuses angeordnet, das von einer Radnabe 8a, einem Drehschemel 22 und einem Gehäusedeckel 22a begrenzt ist. Das dargestellte Planeten-Koppelgetriebe gleicht dem nach Fig. 1, so daß gleiche Teile mit gleichen Bezugszeichen versehen sind. Ein Elektromotor 21a ist ebenfalls in dem bezeichneten Gehäuse angeordnet, und seine Antriebswelle ist über Lager 23a und 24a in einem Wandabschnitt 25a des Drehschemels 22 bzw. in einem Schildabschnitt 26a auf der gegenüberliegenden Seite des Motors 21a gelagert. Dieser hält einen elektrischen Bremsmagneten 27a, der mit einer Bremsscheibe 21 zusammenwirkt, die axial begrenzt beweglich, jedoch drehfest auf der Motorwelle 11 sitzt. Bremse, Motor 21a und Antriebsgetriebe sind in bezug auf ihre Achsen koaxial und bilden mit dem Rad und dem Drehschemel eine Einheit. Der Drehschemel 22 weist einen Zapfen 28a, der eine vertikale Achse 25 hat, um welche der Lenkschemel verschwenkt werden kann, auf. Der hierbei für die Antriebseinheit benötigte Raum ist in Fig. 3 durch den gestrichelt gezeichneten Kreis 29a angedeutet. Der Drehschemel 22 ist im Rahmenabschnitt 24 mit Hilfe eines sogenannten Vierpunktlagers 23 um die vertikale Achse 25 schwenkbar gelagert. Die Verschwenkung des Drehschemels 22 erfolgt z.B. über eine Deichsel.

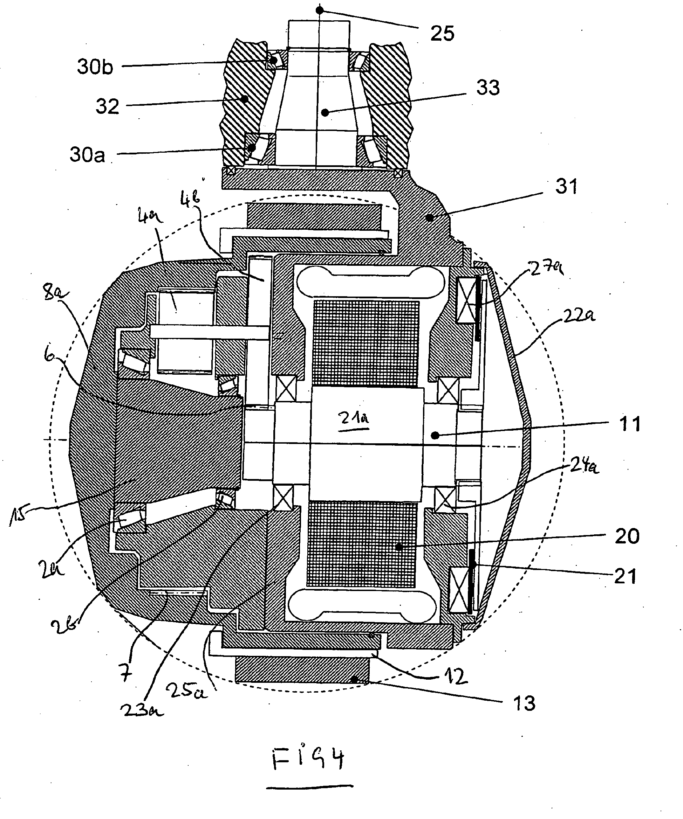

Bei der Ausführungsform nach Fig. 4 ist eine Radnabenantriebseinheit dargestellt für ein gelenktes Rad mit einem Stufenplanetengetriebe gemäß Fig. 2 und einem Antriebsmotor mit Bremse gemäß Fig. 3. Daher sind die Teile, die mit denen nach Fig. 2 und 3 übereinstimmen, mit gleichen Bezugszeichen versehen. Wie aus Fig. 4 ferner zu ersehen, ist mit dem oberen Abschnitt des Drehschemels 31 ein vertikaler Lagerzapfen 33 verbunden, der über eine unteres Kegelrollenlager 30a und ein oberes Kegelrollenlager 30b im Rahmenabschnitt 32 um eine vertikale Achse 25 schwenkbar gelagert. Die Lenkbewegung auf dem Zapfen 33 kann z.B. mittels einer Deichsel erfolgen oder auch durch einen nicht gezeigten Lenkantriebsmotor, beispielsweise einen Elektro- oder Hydromotor.

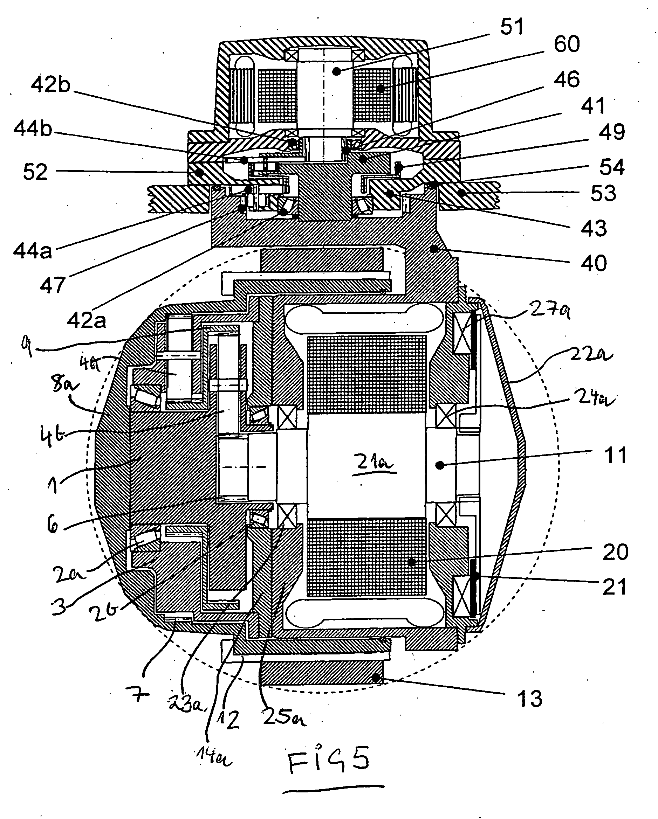

Der in Fig. 5 dargestellte Radnabenantrieb dient für ein gelenktes Rad, wobei das Antriebsgetriebe dem nach Fig. 1 gleicht und der Antriebsmotor und die Bremse der Anordnung nach Fig. 3 oder 4 gleichen. Daher sind Teile, die mit denen nach den Fign. 1, 3 oder 4 übereinstimmen, mit gleichen Bezugszeichen versehen. Die Lenkbewegung der gezeigten Antriebseinheit gemäß Fig. 5 wird von einem Lenkmotor 60 erzeugt, der über ein zweistufiges Planeten-Koppelgetriebe auf einen Drehschemel 40 wirkt. Ein mit dem Drehschemel 40 verbundener Planetenträger 41 dient zur Aufnahme der Drehschemellagerung, welche von zwei Wälzlagern 42a, 42b gebildet ist, die im gezeigten Fall Kegelrollenlager sind. Das erste Wälzlager 42a wird auf der Gegenseite in einem festliegenden Planetenträger 43 aufgenommen, und das zweite Lager 42b ist in einem Teil des Lenkgetriebegehäuses 52, das an einem Fahrzeugrahmen 53 befestigt ist, angeordnet. Planetenräder 44a, 44b der beiden Stufen des Planeten-Koppelgetriebes stehen über eine Koppelwelle 49 miteinander in Wirkverbindung. Angetrieben wird das Lenkgetriebe von einer Lenkmotorwelle 51, auf dem ein Antriebsritzel 46 sitzt bzw. das mit diesem einteilig ausgebildet ist. Der Abtrieb des Lenkgetriebes wird zum einen durch den am Drehschemel 40 befestigten Planetenträger 41 und zum anderen durch ein mit dem Drehschemel verbundenes Hohlrad 47 bewirkt. Eine berührende Dichtung 54 dichtet den Drehschemel 40 gegenüber dem Gehäuse der Antriebseinheit ab. Der Lenkmotor 60 ist im vorliegenden Fall ein Elektromotor. Er kann jedoch auch ein Hydromotor sein.

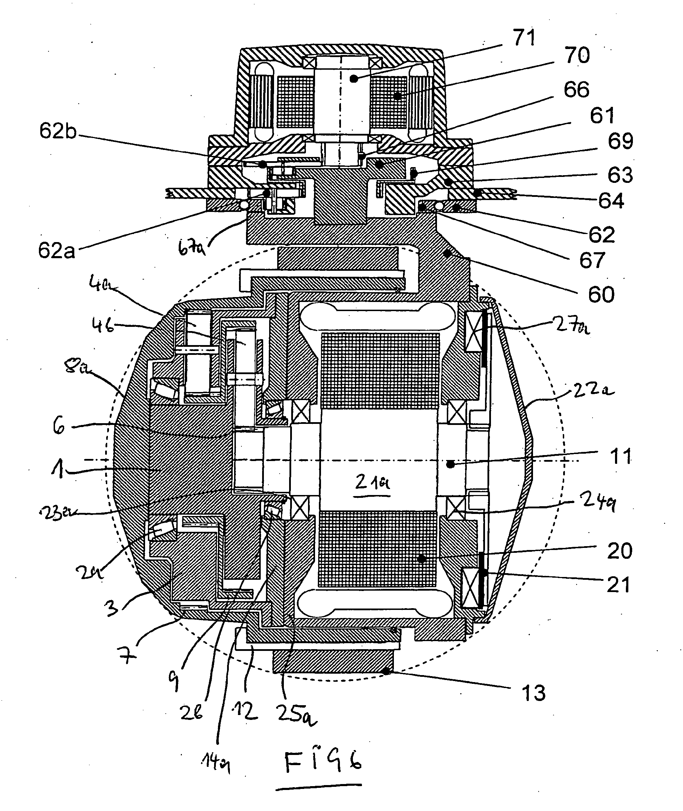

Die Ausführungsform nach Fig. 6 unterscheidet sich von der nach Fig. 5 im wesentlichen durch die Lagerung des Lenkantriebs. Sonst sind gleiche Teile mit der Ausführungsform nach Fig. 5 mit gleichen Bezugszeichen versehen. Die Lenkbewegung erfolgt mit Hilfe eines Lenkmotors 70 und eines zweistufigen Planeten-Koppelgetriebes, das koaxial zur Lenkmotorwelle 71 angeordnet ist. Um eine hohes Übersetzungsverhältnis zu erzielen, sind die Planetenräder 42a, 62b, 62a als Stufenplanetenräder ausgeführt. Sie sind im Planetenträger 61, der drehfest mit dem Drehschemel 60 verbunden ist und im Planetenträger 63 gelagert, welcher fest mit dem Rahmenabschnitt 64 verbunden ist. Die Planetenräder 62a, 62b der beiden Stufen des Planeten-Koppelgetriebes sind über eine Koppelwelle 69 in Wirkverbindung. Ein Antriebsritzel 66 der Lenkmotorwelle 71 wirkt mit der größeren Stufe der Planetenräder 62b zusammen. Der Abtrieb des Lenkgetriebes wird zum einen durch den am Drehschemel 60 befestigten Planetenträger 61 und zum anderen durch das mit einer Innenverzahnung 67 versehene Innenteil 67a eines Vierpunktlagers 62 bewirkt. Das Außenteil des Vierpunktlagers ist mit dem Rahmenabschnitt 64 fest verbunden. Der Lenkmotor 70 ist ein Elektromotor.

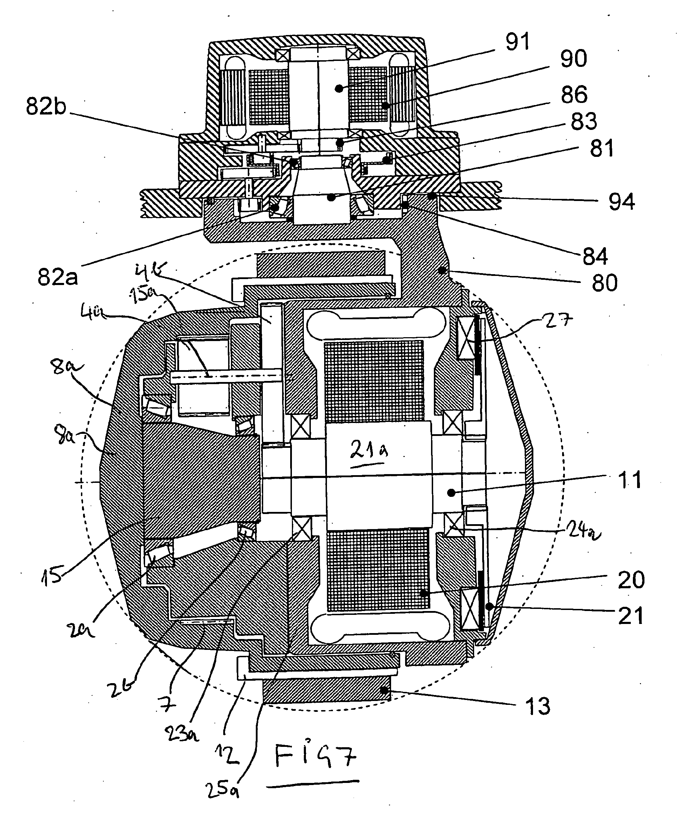

Die Ausführungsform nach Fig. 7 unterscheidet sich von der nach Fig. 4 durch die Ausbildung eines motorischen Lenkantriebs. Ansonsten sind mit Fig. 4 gleiche Teile mit gleichen Bezugszeichen versehen. Das Antriebsgetriebe gleicht im übrigen der Ausführungsform nach Fig. 2. Eine Lenkbewegung wird von einem Lenkmotor 90 erzeugt, wobei seine Lenkmotorwelle 91 über ein zweistufiges Stufenplanetengetriebe auf einen Drehschemel 80 wirkt. Ein mit dem Drehschemel verbundener Lagerzapfen 81 dient zur Aufnahme der Drehschemellagerung, welche aus zwei vertikal beabstandeten Kegelrollenlagern 82a, 82b gebildet ist. Auf der Gegenseite werden die Rollenlager 82a, 82b von Teilen des Lenkgetriebegehäuses aufgenommen. Die Planetenräder der beiden Stufen des Stufenplanetengetriebes sind durch eine Verbindungswelle 83 in Wirkverbindung. Ein Antriebsritzel 86 auf der Motorwelle 91 wirkt mit der größeren Stufe der Stufenplanetenräder der ersten Getriebestufe zusammen. Der Abtrieb des Lenkgetriebes wird durch ein mit dem Drehschemel 80 verbundenes Hohlrad 84 bewirkt. Eine berührende Dichtung 94 dichtet den Drehschemel 80 gegenüber dem Gehäuse der Lenkantriebseinheit ab.

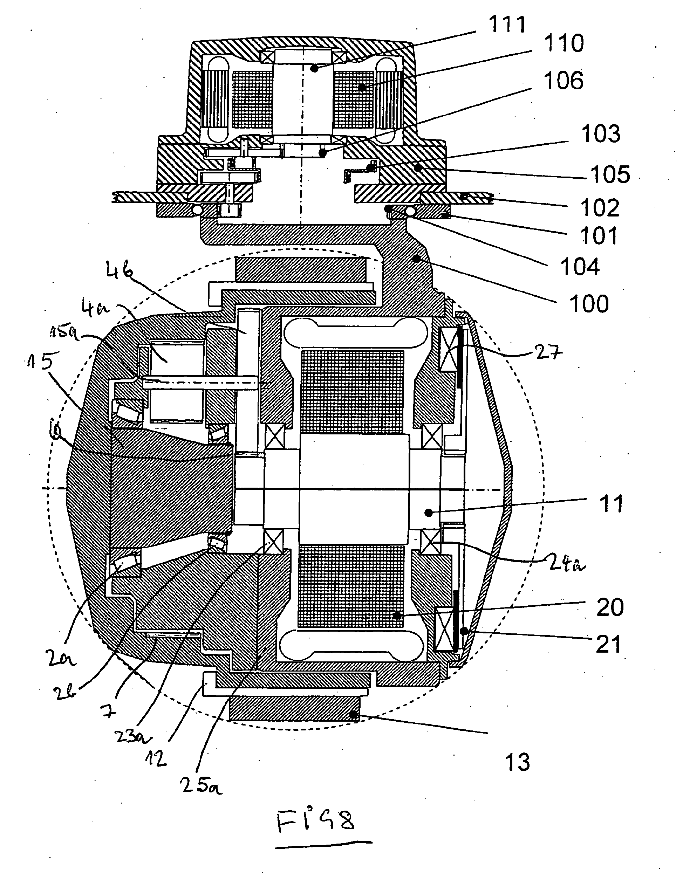

Die Ausführungsform nach Fig. 8 unterscheidet sich von der nach Fig. 7 durch den Lenkantrieb. Daher sind mit Fig. 7 gleiche Teile mit gleichen Bezugszeichen versehen. Die Lenkbewegung wird von einem Lenkmotor 110 erzeugt und mittels eines zweistufigen Stufenplanetengetriebes auf einen Drehschemel 100 übertragen. Für die Drehschemellagerung ist ein Vierpunktlager vorgesehen, dessen bewegliches Innenteil mit dem Drehschemel und dessen Außenteil mit einem Gehäuse 105 bzw. dem Fahrzeugrahmen 102 verbunden ist. Die Planetenräder der beiden Stufen des Stufenplanetengetriebes sind durch eine Verbindungswelle 103 in Wirkverbindung. Angetrieben wird das Lenkgetriebe von einem auf einer Lenkmotorwelle 111 befestigten oder aus der Welle geformten Antriebsritzel 106. Der Abtrieb des Lenkgetriebes wird von dem mit einer Innenverzahnung 104 versehenen Innenteil des Vierpunktlagers 101 bewirkt. Der Lenkmotor ist eine Elektromotor.

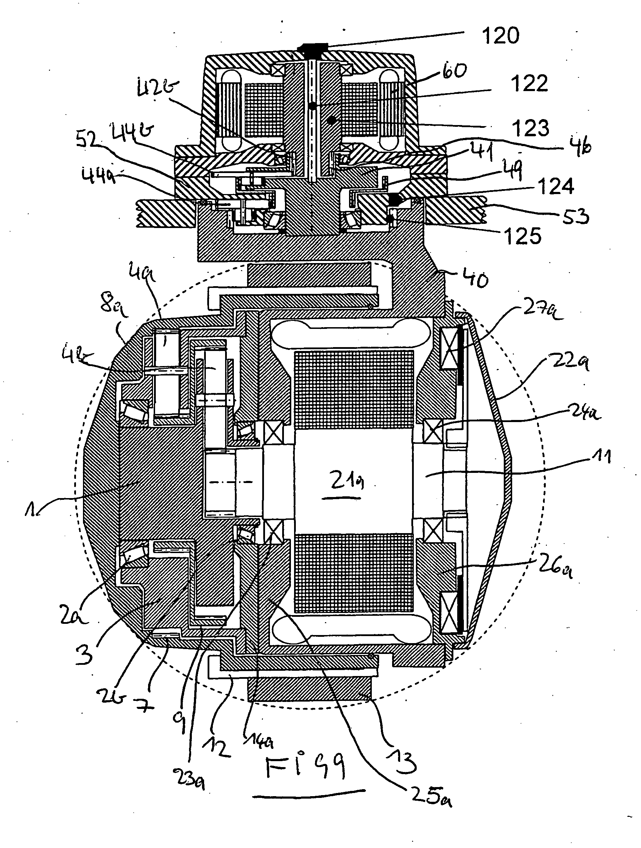

Die Ausführungsform nach Fig. 9 gleicht im wesentlichen der nach Fig. 5 sowohl im Hinblick auf die Ausbildung der Radnabenantriebseinheit als auch im Hinblick auf die Lenkantriebseinheit. Daher sind mit Fig. 5 gleiche Teile mit gleichen Bezugszeichen versehen. In Fig. 9 ist statt der Lenkmotorwelle 51 nach Fig. 5 eine Hohlwelle 123 vorgesehen. Durch diese hindurch erstreckt sich eine Lenkwinkelsensorwelle 122, die mit dem Planetenträger 41 fest verbunden ist. Sie erstreckt sich zum Gehäuse des Lenkantriebs, an dem ein Lenkwinkelsensor 120 angebracht ist. Der Lenkwinkelsensor 120 mißt den Lenkwinkel des Drehschemels 40 redundant zur Lenkwinkelerfassung im Lenkmotor. Eine redundante Lenkwinkelsensierung ist auch möglich mit einem Inkrementalsensor 124, der eine Kontur an einem mit dem Drehschemel 40 verbundenen Bauteil, hier der Hohlradverzahnung 125, abtastet.

## Patentansprüche

1. Radnabenantrieb mit Antriebsmotor und Antriebsgetriebe für Flurförderzeuge mit den folgenden Merkmalen:
- Antriebs- und Abtriebsachse des Antriebsgetriebes, Drehachse des Rades und Antriebsachse des Antriebsmotors sind koaxial angeordnet;
- das Antriebsgetriebe ist ein zweistufiges Planeten-Koppelgetriebe;
- zwei horizontal beabstandete Radlager befinden sich innerhalb des Antriebsgetriebes, wobei
- ein erstes Radlager (2a) zwischen einem mit der Radnabe (8) verbundenen ersten Lagerabschnitt und einem rahmenfesten Planetenträger (3, 16) und eine zweites Radlager (2b) zwischen dem ersten Lagerabschnitt und einem rahmenfesten zweiten Lagerabschnitt oder dem rahmenfesten Planetenträger (3, 16) angeordnet ist, wobei der erste Lagerabschnitt von einem zweiten Planetenträger (1) einer ersten Stufe des Planeten-Koppelgetriebes gebildet ist.

2. Radnabenantrieb mit Antriebsmotor und Antriebsgetriebe für Flurförderzeuge mit den folgenden Merkmalen:
- Antriebs- und Abtriebsachse des Antriebsgetriebes, Drehachse des Rades und Antriebsachse des Antriebsmotors sind koaxial angeordnet;
- das Antriebsgetriebe ist ein einstufiges Stufenplanetengetriebe;
- zwei horizontal beabstandete Radlager befinden sich innerhalb des Antriebsgetriebes, wobei
- ein erstes Radlager (2a) zwischen einem mit der Radnabe (8) verbundenen ersten Lagerabschnitt oder einem rahmenfesten Planetenträger (3, 16) und ein zweites Radlager (2b) zwischen dem ersten Lagerabschnitt und einem rahmenfesten zweiten Lagerabschnitt oder dem rahmenfesten Planetenträger (3, 16) angeordnet ist, wobei ein mit der Radnabe (8) verbundener Lagerzapfen (15) beide Lagerabschnitte für die Radlager bildet, die sich auf der anderen Seite am rahmenfesten Planetenträger (16) abstützen.

3. Radnabenantrieb nach Anspruch 1 oder 2, **dadurch gekennzeichnet, daß** die Nabe (8, 8a) als Hohlrad ein Abtriebsteil für die zweite Stufe des Planeten-Koppelgetriebes bzw. die letzte Stufe des Stufenplanetengetriebes bildet.

4. Radnabenantrieb nach einem der Ansprüche 1 bis 3, **dadurch gekennzeichnet, daß** die Radlager von Kegekollenlager gebildet sind.

5. Radnabenantrieb nach einem der Ansprüche 1 bis 3, **dadurch gekennzeichnet, daß** der Rahmen von einem Lenkdrehschemel für das gelenkte Rad des Radnabenantriebs gebildet ist, der in einem Gehäuse den Antriebsmotor und gegebenenfalls eine Bremse lagert.

6. Radnabenantrieb nach Anspruch 4, **dadurch gekennzeichnet, daß** der Drehschemel (22) über ein Vierpunktlager (23) an einem Rahmen (24) des Flurförderzeugs um einer vertikal Achse drehbar gelagert ist.

7. Radnabenantrieb nach Anspruch 4, **dadurch gekennzeichnet, daß** der Drehschemel (31) einen vertikalen Lagerzapfen (33) aufweist, der über zwei vertikal beabstandete Lager (30a, 30b) am Fahrzeugrahmen (32) gelagert ist.

8. Radnabenantrieb nach einem der Ansprüche 4 bis 6, **dadurch gekennzeichnet, daß** Antriebsgetriebe, Antriebsmotor (21 a) und Bremse (21, 27a) als Einheit in einem Gehäuse angeordnet sind, das von der Radnabe (8a), dem Drehschemel (31) und einem Deckel (22a) gebildet ist, wobei der Deckel auf der der Radnabe (8a) entgegengesetzten Seite angeordnet ist.

9. Radnabenantrieb nach einem der Ansprüche 4 bis 7, **dadurch gekennzeichnet, daß** ein Lenkmotor (60, 70, 90, 110) vorgesehen ist, der über ein Lenkgetriebe, insbesondere ein Planeten-Koppelgetriebe oder ein ein- oder mehrstufiges Stufenplanetengetriebe mit dem Lenkschemel (40, 60, 80, 100) gekoppelt ist und die Lagerung des Drehschemels innerhalb des Lenkgetriebes angeordnet ist.

10. Radnabenantrieb nach Anspruch 8, **dadurch gekennzeichnet, daß** die Lagerung des Drehschemels ein Vierpunktlager ist.

11. Radnabenantrieb nach Anspruch 8 oder 9, **dadurch gekennzeichnet, daß** ein Planeten-Koppelgetriebe als Lenkgetriebe vorgesehen ist mit einem ersten rahmenfesten Planetenträger (43) und einem drehschemelfesten zweiten Planetenträger (41) und ein erstes Drehschemellager (42b) wischen dem Rahmen und dem zweiten Planetenträger (41) und ein zweites Drehschemellager (42a) zwischen dem zweiten und ersten Planetenträger (43, 41) angeordnet ist.

12. Radnabenantrieb nach Anspruch 9, **dadurch gekennzeichnet, daß** die Lagerung des Drehschemels ein Vierpunktlager ist.

13. Radnabenantrieb nach Anspruch 8, **dadurch gekennzeichnet, daß** ein zweistufiges Stufenplanetengetriebe als Lenkgetriebe vorgesehen ist mit einem rahmenfesten Planetenträger, einem drehschemelfesten Lagerzapfen (81), der sich in das Lenkgetriebe hinein erstreckt und beide Drehschemellager (82a, 82b) zwischen dem Lagerzapfen (81) und dem Planetenträger angeordnet sind.

14. Radnabenantrieb nach Anspruch 11, **dadurch gekennzeichnet, daß** die Lagerung des Drehschemels ein Vierpunktlager ist.

15. Radnabenantrieb nach Anspruch 5, **dadurch gekennzeichnet, daß** der innere mit dem Drehschemel (60) verbundene Teil eines Vierpunktlagers (62) ein Hohlantriebsrad für das Planetengetriebe bildet.

16. Radnabenantrieb nach einem der Ansprüche 4 bis 12, **dadurch gekennzeichnet, daß** mit einem Gehäuse des Lenkantriebs ein Winkelsensor (120) verbunden ist, der auf der Achse des Lenkmotors (60) angeordnet ist und mit dem Drehschemel (40) bzw. mit einem mit dem Drehschemel verbundener Lagerzapfen oder Planetenträger (41) eine Welle (122) verbunden ist, die sich koaxial durch eine hohle Antriebswelle (123) des Lenkmotors (60) zum Winkelsensor (120) hin erstreckt.

17. Radnabenantrieb nach Anspruch 14, **dadurch gekennzeichnet, daß** ein Inkrementalsensor die Kontur des Drehschemels abtastet, insbesondere die Hohlradverzahnung.

18. Radnabenantrieb nach einem der Ansprüche 1 bis 15, **dadurch gekennzeichnet, daß** der Antriebsmotor ein Elektromotor oder ein Hydromotor ist.

19. Radnabenantrieb nach einem der Ansprüche 8 bis 16, **dadurch gekennzeichnet, daß** der Lenkmotor ein Elektromotor oder Hydromotor ist.

## Claims

1. A wheel hub drive with drive motor and drive gear system for industrial trucks, with the following features:
- driving and output axis of the drive gear system, rotation axis of the wheel and driving axis of the drive motor are disposed coaxially;
- the drive gear system is a two step planetary coupler mechanism gear system;
- two horizontally spaced wheel bearings are located inside the drive gear system, wherein
- a first wheel bearing (2a) is disposed between a first bearing portion, connected with the wheel hub (8), and a frame-fixed planet carrier (3, 16), and a second wheel bearing (2b) is disposed between the first bearing portion and a frame-fixed second bearing portion or the frame-fixed planet carrier (3, 16), wherein the first bearing portion is formed by a second planet carrier (1) of a first step of the planetary coupler mechanism gear system..

2. A wheel hub drive with drive motor and drive gear system for industrial trucks, with the following features:
- driving and output axis of the drive gear system, rotation axis of the wheel and driving axis of the drive motor are disposed coaxially;
- the drive gear system is a single step planetary stepping gear system;
- two horizontally spaced wheel bearings are located inside the drive gear system, wherein
- a first wheel bearing (2a) is disposed between a first bearing portion, connected with the wheel hub (8), and a frame-fixed planet carrier (3, 16), and a second wheel bearing (2b) is disposed between the first bearing portion and a frame-fixed second bearing portion or the frame-fixed planet carrier (3, 16), wherein a bearing pin (15) connected to the wheel hub (8) forms both bearing portions for the wheel bearings, which prop up on the other side on the frame-fixed planet carrier (16).

3. A wheel hub drive according to claim 1 or 2, **characterised in that** the hub (8, 8a) as a hollow wheel forms an output element for the second step of the planetary coupler mechanism gear system or the last step of the planetary stepping gear system, respectively.

4. A wheel hub drive according to any one of claims 1 to 3, **characterised in that** the wheel bearings are formed by taper roller bearings.

5. A wheel hub drive according to any one of claims 1 to 3, **characterised in that** the frame is formed by a steering fifth wheel for the steered wheel of the wheel hub drive, which in a housing supports in bearings the drive motor and, as the case may be, a brake.

6. A wheel hub drive according to claim 4, **characterised in that** the fifth wheel (22) is rotatably mounted around a vertical axis via a four point bearing (23) on a frame (24) of the industrial truck.

7. A wheel hub drive according to claim 4, **characterised in that** the fifth wheel (31) has a vertical bearing pin (33), which is supported via two vertically spaced bearings (30a, 30b) on the vehicle frame (32).

8. A wheel hub drive according to any one of claims 4 to 6, **characterised in that** drive gear system, drive motor (21a) and brake (21, 27a) are disposed as an unit in a housing which is formed by the wheel hub (8a), the fifth wheel (31) and a cover (22a), wherein the cover is disposed on the side opposite to the wheel hub (8a).

9. A wheel hub drive according to any one of claims 4 to 7, **characterised in that** a steering motor (60, 70, 90, 110) is provided, which is coupled with the steering fifth wheel (40, 60, 80, 100) via a steering gear system, a planetary coupler mechanism gear system or a single step or multi step planetary stepping gear system in particular, and the bearing of the fifth wheel is disposed inside the steering gear system.

10. A wheel hub drive according to claim 8, **characterised in that** the bearing of the fifth wheel is a four point bearing.

11. A wheel hub drive according to claim 8 or 9, **characterised in that** a planetary coupler mechanism gear system is provided as the steering gear system, with a first frame-fixed planet carrier (43) and a second planet carrier (41) fixed on the fifth wheel, and a first fifth wheel bearing (42b) is disposed between the frame and the second planet carrier (41) and a second fifth wheel bearing (42a) is disposed between the second and the first planet carrier (43, 41).

12. A wheel hub drive according to claim 9, **characterised in that** the bearing of the fifth wheel is a four point bearing.

13. A wheel hub drive according to claim 8, **characterised in that** a two step stepping planetary gear system is provided as a steering gear system, with a frame-fixed planet carrier, a bearing pin (81) fixed on the fifth wheel, which extends into the steering gear system, and both fifth wheel bearings (82a, 82b) are disposed between the bearing pin (81) and the planet carrier.

14. A wheel hub drive according to claim 11, **characterised in that** the bearing of the fifth wheel is a four point bearing.

15. A wheel hub drive according to claim 5, **characterised in that** the inner portion of a four point bearing (62), connected with the fifth wheel (60), forms a hollow driving wheel for the planetary gear system.

16. A wheel hub drive according to any one of claims 4 to 12, **characterised in that** an angle sensor (120) is connected with a housing of the steering drive, which is disposed on the axis of the steering motor (60), and a shaft (122) is connected with the fifth wheel (40) or with a bearing pin or planet carrier (41), respectively, connected with the fifth wheel, said shaft extending coaxially through a hollow driving shaft (123) of the steering motor (60) towards the angle sensor (120).

17. A wheel hub drive according to claim 14, **characterised in that** an incremental sensor scans the outlines of the fifth wheel, the hollow wheel tooth system in particular.

18. A wheel hub drive according to any one of claims 1 to 15, **characterised in that** the drive motor is an electromotor or a hydraulic motor.

19. A wheel hub drive according to any one of claims 8 to 16, **characterised in that** the steering motor is an electromotor or a hydraulic motor.

## Revendications

1. Moyeu de roue avec moteur de commande et mécanisme d'entraînement pour chariots de manutention, comprenant les caractéristiques suivantes :
- l'axe de commande et l'axe de sortie du mécanisme d'entraînement, l'axe de rotation de la roue et l'axe de commande du moteur de commande sont disposés de manière coaxiale ;
- le mécanisme d'entraînement est un engrenage planétaire couplé à double réduction ;
- deux roulements de roue espacés horizontalement se trouvent à l'intérieur du mécanisme d'entraînement,
- un premier roulement de roue (2a) étant disposé entre une première section de roulement reliée au moyeu de roue (8) et un porte-satellites (3, 16) monté sur cadre et un second roulement de roue (2b) entre la première section de roulement et une seconde section de roulement montée sur cadre ou le porte-satellites (3, 16) monté sur cadre, la première section de roulement étant formée par un second porte-satellites (1) d'un premier étage de réduction de l'engrenage planétaire couplé.

2. Moyeu de roue avec moteur de commande et mécanisme d'entraînement pour chariots de manutention comprenant les caractéristiques suivantes :
- l'axe de commande et l'axe de sortie du mécanisme d'entraînement, l'axe de rotation de la roue, et l'axe de commande du moteur de commande sont disposés de manière coaxiale ;
- le mécanisme d'entraînement est un variateur de vitesse à engrenage planétaire à simple réduction ;
- deux roulements de roue espacés horizontalement se trouvent à l'intérieur du mécanisme d'entraînement,
- un premier roulement de roue (2a) étant disposé entre une première section de roulement reliée au moyeu de roue (8) ou un porte-satellites (3, 16) monté sur cadre et un second roulement de roue (2b) entre la première section de roulement et une seconde section de roulement montée sur cadre ou le porte-satellites (3, 16) monté sur cadre, un tourillon (15) relié au moyeu de roue (8) formant les deux sections de roulement pour les roulements de roue, qui s'appuient de l'autre côté au niveau du porte-satellites (16) monté sur cadre.

3. Moyeu de roue selon la revendication 1 ou 2, **caractérisé en ce que** le moyeu (8, 8a) forme en tant que couronne un élément de sortie pour le second étage de l'engrenage planétaire couplé et/ou le dernier étage du variateur de vitesse à engrenage planétaire.

4. Moyeu de roue selon l'une des revendications 1 à 3, **caractérisé en ce que** les roulements de roue sont formés par des roulements à galets coniques.

5. Moyeu de roue selon l'une des revendications 1 à 3, **caractérisé en ce que** le cadre est formé par une traverse pivotante de direction pour la roue directrice de l'entraînement à moyeu de roue, qui loge dans un carter le moteur de commande et le cas échéant un frein.

6. Moyeu de roue selon la revendication 4, **caractérisé en ce que** la traverse pivotante (22) est logée de manière pivotante autour d'un axe vertical par le biais d'un roulement à quatre points de contact (23) au niveau d'un cadre (24) du chariot de manutention.

7. Moyeu de roue selon la revendication 4, **caractérisé en ce que** la traverse pivotante (31) présente un tourillon (33) vertical qui est logé au niveau du cadre de véhicule (32) par le biais de deux roulements espacés verticalement (30a, 30b).

8. Moyeu de roue selon l'une des revendications 4 à 6, **caractérisé en ce que** le mécanisme d'entraînement, le moteur de commande (21a) et le frein (21, 27a) sont disposés en tant qu'unité dans un carter qui est formé par le moyeu de roue (8a), la traverse pivotante (31) et un couvercle (22a), le couvercle étant disposé sur le côté opposé au moyeu de roue (8a).

9. Moyeu de roue selon l'une des revendications 4 à 7, **caractérisé en ce qu'**un moteur de direction (60, 70, 90, 110) est prévu qui est couplé par le biais d'un mécanisme de direction, en particulier un engrenage planétaire couplé ou un variateur de vitesse à engrenage planétaire à simple réduction ou réduction multiple, à la traverse de direction (40, 60, 80, 100) et le logement de la traverse pivotante est disposé à l'intérieur du mécanisme de direction.

10. Moyeu de roue selon la revendication 8, **caractérisé en ce que** le logement de la traverse pivotante est un roulement à quatre points de contact.

11. Moyeu de roue selon la revendication 8 ou 9, **caractérisé en ce qu'**un engrenage planétaire couplé est prévu en tant que mécanisme de direction avec un premier porte-satellites (43) monté sur cadre et un second porte-satellites (41) monté sur traverse pivotante et un premier roulement de traverse pivotante (42b) est disposé entre le cadre et le second porte-satellites (41) et un second roulement de traverse pivotante (42a) entre le second et le premier porte-satellites (43, 41).

12. Moyeu de roue selon la revendication 9, **caractérisé en ce que** le logement de la traverse pivotante est un roulement à quatre points de contact.

13. Moyeu de roue selon la revendication 8, **caractérisé en ce qu'**un variateur de vitesse à engrenage planétaire à double réduction est prévu en tant que mécanisme de direction avec un porte-satellites monté sur cadre, un tourillon (81) monté sur traverse pivotante, qui s'étend à l'intérieur du mécanisme de direction et les deux roulements de traverse pivotante (82a, 82b) sont disposés entre le tourillon (81) et le porte-satellites.

14. Moyeu de roue selon la revendication 11, **caractérisé en ce que** le logement de la traverse pivotante est un roulement à quatre points de contact.

15. Moyeu de roue selon la revendication 5, **caractérisé en ce que** la partie intérieure reliée à la traverse pivotante (60) d'un roulement à quatre points de contact (62) forme une couronne d'entraînement pour l'engrenage planétaire.

16. Moyeu de roue selon l'une des revendications 4 à 12, **caractérisé en ce qu'**avec un carter de l'entraînement de direction est relié un capteur angulaire (120) qui est disposé sur l'axe du moteur de direction (60) et un arbre (122) est relié à la traverse pivotante (40) et/ou à un tourillon ou porte-satellites (41) relié à la traverse pivotante, l'arbre s'étendant de manière coaxiale à travers un arbre de commande (123) creux du moteur de direction (60) vers le capteur angulaire (120).

17. Moyeu de roue selon la revendication 14, **caractérisé en ce qu'**un capteur incrémental balaie le contour de la traverse pivotante, en particulier la denture de la couronne.

18. Moyeu de roue selon l'une des revendications 1 à 15, **caractérisé en ce que** le moteur de commande est un moteur électrique ou un moteur hydraulique.

19. Moyeu de roue selon l'une des revendications 8 à 16, **caractérisé en ce que** le moteur de direction est un moteur électrique ou un moteur hydraulique.
